# EUROPEAN PATENT APPLICATION

(11) **EP 1 107 548 A2**
(43) Date of publication of application: **13.06.2001**
(21) Application number: 00126318.5
(22) Date of filing: 01.12.2000
(51) Int. Cl.: H04M 1/725, H04M 1/73

(54) **Battery changing method during call processing in wireless telephone set**

(30) Priority: 02.12.1999 KR 9954381
(71) Applicant: SAMSUNG ELECTRONICS CO., LTD., Suwon-City, Kyungki-do (KR)
(72) Inventor: Han, Jay-Hee, Mapo-gu, Seoul (KR)
(74) Representative: Grünecker, Kinkeldey, Stockmair & Schwanhäusser Anwaltssozietät

(57) **Abstract**

Disclosed is a battery changing method during a call processing without interrupting a talking path in a wireless telephone set having a supplementary battery and a main battery. In the battery changing method according to the invention, it is detected whether or not a capacity of the battery is less than a predetermined value during the call processing. In the affirmative, it is detected whether or not a mode set key requiring a battery change is inputted by a user. In the affirmative, an electric power of the wireless telephone set is switched to the supplementary battery and a power saving mode is operated to transmit messages for maintaining the wireless link. It is then detected whether or not a key requesting a return to a normal mode is inputted in the power saving mode. In the affirmative, the electric power of the wireless telephone set is switched to the main battery and a normal mode is operated.

## Description

The present invention relates generally to a method of controlling a wireless telephone set, and in particular, to a battery changing method during a call processing in a wireless telephone set.

In general, the conventional wireless telephone set is designed to operate by means of batteries. Therefore, if a battery is exhausted, it is required to change or recharge the battery.

However, if the battery is exhausted during a call processing, a user needs to undergo complicated procedures such as interrupting a talking path, changing the battery, turning on the electric power of the wireless telephone set and then making a phone call again.

To settle the above problems, a technology has been introduced such that a supplementary battery is built in the wireless telephone set and a power supply is switched by the supplementary battery when an outer packaging battery is exhausted. However, if the supplementary battery is used during a call processing when a maximum electric power is required in the wireless telephone set, durability of the built-in supplementary battery is curtailed. Therefore, a battery of greater capacity is required to maintain the talking path during the call processing when changing the exhausted battery. Despite the developed technology in the field of batteries, however, problems still arise, i.e., as the greater the capacity of a battery becomes, the larger its size and the heavier its weight become. As a consequence, the wireless telephone set becomes larger and heavier, thereby impeding the portability of the wireless telephone set, which is the most sensitive point. Thus, increasing the capacity of batteries has a limit.

It is, therefore, the object of the present invention to provide a method for changing the battery during a call processing without interrupting a talking path in a wireless telephone set housing a small-sized supplementary battery.

The object of the present invention is solved by the subject-matters of the independent claims.

Preferred embodiments are the subject-matters of the dependent claims.

According to an aspect of the present invention, there is provided a method for allowing a user to secure sufficient time to change the battery during a call processing by using the small-sized supplementary battery.

According to another aspect of the present invention, there is provided a method for changing the battery and maintaining the talking path by availing the minimum electric power during a call processing.

To achieve the above object, there is provided a battery changing method during a call processing without interrupting the talking path in a wireless telephone set housing a main battery and a supplementary battery. The battery changing method according to the present invention comprises the steps of: detecting whether or not the capacity of the battery is less than a predetermined value during a call processing; in the affirmative, detecting whether or not a mode set key for changing the battery is inputted by the user; in the affirmative, switching the electric power of the wireless telephone set to the supplementary battery; operating a power saving mode for transmitting messages to maintain a wireless link; detecting whether or not a key requesting a return to the normal mode is inputted during operation of the power saving mode; and in the affirmative, switching the electric power of the wireless telephone set to the main battery.

The above object, features and advantages of the present invention will become more apparent from the following detailed description when taken in conjunction with the accompanying drawings, in which:
FIG. 1 is a schematic block diagram illustrating a wireless telephone set according to a preferred embodiment of the present invention;
FIG. 2 is a flow chart illustrating a control over a battery change during a call processing according to a preferred embodiment of the present invention; and
FIG. 3 is a flow chart illustrating a control over a battery change during a call processing according to another preferred embodiment of the present invention.

A preferred embodiment of the present invention will be described herein below with reference to the accompanying drawings. While the invention has been shown and described with reference to certain preferred embodiments thereof, it will be understood by those skilled in the art that various changes in form and details may be made therein without departing from the spirit and scope of the invention as defined by the appended claims. In the following description, well-known functions or constructions are not described in detail since they would obscure the invention in unnecessary detail.

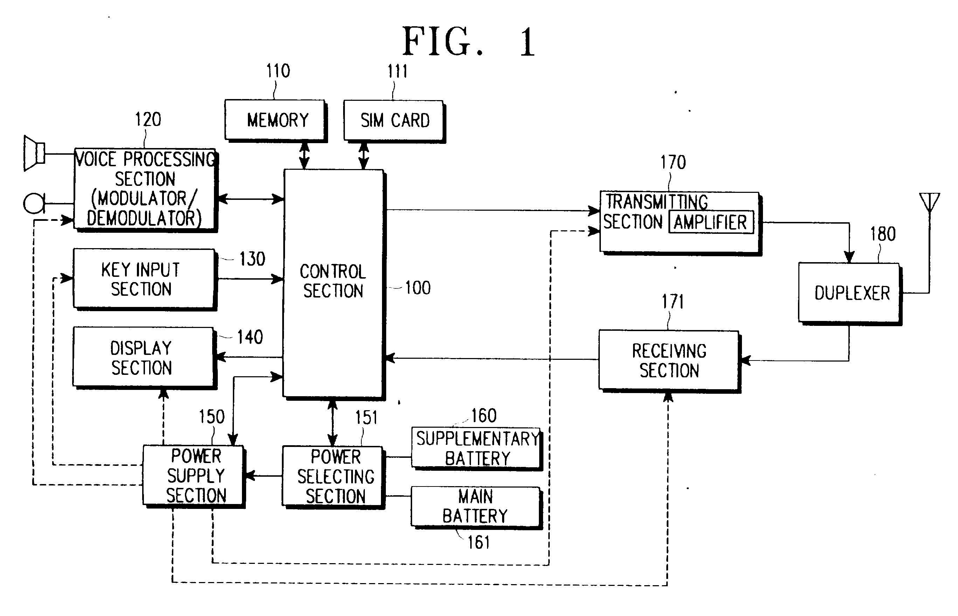

FIG. 1 is a schematic block diagram illustrating a wireless telephone set according to a preferred embodiment of the present invention. Referring to FIG. 1, a control section 100 controls overall operations of the wireless telephone set. A key input section 130, including a plurality of numerical and alphabetical keys, function keys (FCN), storage keys (STO), etc., generates key data with respect to the keys. A memory 110 temporarily stores data generated during operation of a predetermined operational program and the above operation program. A display section 140 displays a plurality of data, including data on the operation and data inputted by the key input section 130. A transmitting section 170, including an amplifier for amplifying signals to be transmitted to a station, filters and amplifies the signals. A receiving section 171 amplifies and filters signals received through an antenna (ANT) and down-converts the signals into base band signals. A voice processing section 120 digitalizes voice inputted through a microphone under the control of the control section 100 and demodulates voice data inputted by the receiving section 171, and then outputs the same through a speaker. The voice processing section 120 includes a modulator and a demodulator for operating the above operation. In general, the modulator and the demodulator are referred to as a coder and a decoder (CODEC), respectively. A duplexer 180 connects the antenna to the transmitting section 170 and the receiving section 171. A SIM card 111 stores information on a subscriber and the wireless telephone set as well as other various information necessary for connecting a call.

A power supply section 150 supplies or interrupts the electric power to each section of the wireless telephone set under the control by the control section. A power selecting section 151 measures output voltages of a supplementary battery 160 and a main battery 161, detects whether or not the main battery 161 is attached/detached, and then switches the batteries 160, 161 so as to be connected to the power supply section under the control by the control section 100.

If not fully charged while charging or changing the main battery 161, the supplementary battery 160 is charged from the main battery 161. If the supplementary battery 160 is not full charged during the battery charging, not only the main battery 161 but also the supplementary battery 160 are fully charged by means of a charger. In the course of the battery charging by means of the charger, the supplementary battery 160 may be charged through the same charging route as the main battery 161, or may be directly charged through an external pot. Here, the supplementary battery may be replaced by an ordinary battery.

It is out of question that the wireless telephone set as described above and a wireless telephone set to be described herein below are used for a global system for mobile (GSM), a code division multiple access (CDMA), a mobile terminal equipment for next generation (IMT 2000) or a mobile phone using satellites, and thus is not referred to as a wireless telephone set for a particular system.

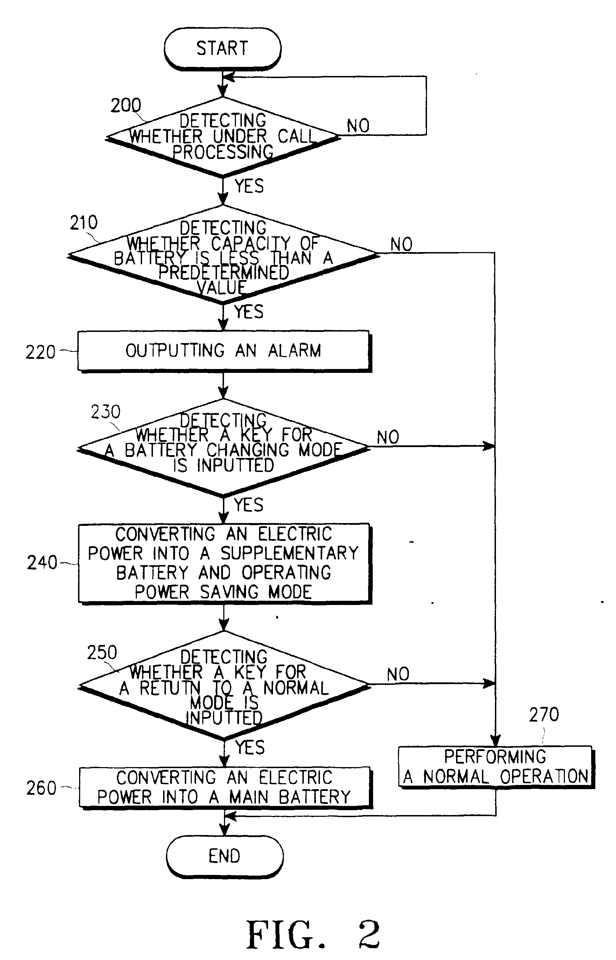

An operation of the preferred embodiment of the present invention will now be described with reference to FIGs. 1 and 2.

The control section 100 detects whether or not the wireless telephone set is under call processing in step 200. In the affirmative, the power selecting section 151 detects whether or not the capacity of the main battery 161 is less than a predetermined value in step 210. In the affirmative, step 22 is proceeded with. The control section 100 outputs alarm or character messages through a speaker in step 220 to inform that the capacity of the main battery 161 is almost exhausted.

The control section 100 detects whether or not the key data inputted through the key input section 130 by a user requires an operation of a battery change mode in step 230. Step 240 is proceeded with in the affirmative, whereas step 270 is proceeded with in the negative.

The control section 100 switches the electric power of the wireless telephone set from the main battery 161 to the supplementary battery 160 in step 240. In other words, a switching operation of the power selecting section 151 switches the electric power path directed to the power supply section 150 to the supplementary section 160. Thus, the wireless telephone set performs a power saving mode.

The following is a detailed description of the power saving mode.

If the power saving mode is performed, the control section 100 controls the power supply section 150 so as to turn off the electric power supplied to the display section 140, the receiving section 171 and the voice processing section 120. Here, the key input section 130 may turn off the electric power supplied to all sections, excluding particular keys necessary for returning to a normal mode in the future. When turning off the electric power supplied to the voice processing section 120, only the modulator and the demodulator in the voice processing section 120 may be turned off.

If a person using a GSM wireless telephone set does not speak, the system transmits a silence indicator only to the station. In that case, the amount of transmitted data and transmitting band width decreases, and the volume of transmitted frame is also decreased, thereby reducing consumption of the electric power, According to a preferred embodiment of the present invention, the wireless telephone set transmits a silence indicator in order to save consumption of the electric power during operation fo the power saving mode, even if a user speaks on the phone. After transmission of the silence indicator, the wireless telephone set sends messages to indicate that a dumb condition, i.e., a discontinuous transmission (DTX), continues. In other words, the wireless telephone set transmits the silence indicator so as to inform of the dumb condition and transmits the DTX so as to inform of continuation of the dumb condition. In that case, the volume of the transmission frame can be reduced by up to 85%.

The electric power transmitted by the GSM wireless telephone set is determined based on a power level required for the wireless telephone set after the station measures strength of signals transmitted by the wireless telephone set to the station. In other words, if the wireless telephone set becomes distant from the station and the signals received by the station become abated, the station transmits messages to the wireless telephone set to request an elevation of the transmitted power level. The power level here means a power level recommended by the station in order to maintain communication with the wireless telephone set. The specification of the GSM requires that the station maintain a demodulation or a link even if the level received from the wireless telephone set is about two grades (6dB) lower than the recommended power level. Therefore, the link can be maintained without any strain even if the wireless telephone set transmits the electric power two grades (6dB) lower than the level recommended by the station. According to a preferred embodiment of the present invention, the power level of the signals to be transmitted to the station during the power saving mode is transmitted on conditions of two grades lower than the level recommended by the station before operating the power saving mode. Thus, the transmitted power level may be higher than the level, which is two grades lower than the recommended level. For example, if there is a request for transmission with an electric power of 10dB, the transmitted power level can be lowered to a minimum level of 4dB. In that case, the transmission power can be saved 10% in comparison with the usual case.

According to the conventional GSM method, the wireless telephone set periodically reports diverse information in order to maintain the link with the station. If the station fails to generate reports more than a predetermined number of reports, the link with the wireless telephone set is considered to have been terminated. During the power saving mode according to the present invention, the reports are generated with a minimum cycle necessary for maintaining the link with the station and the wireless telephone set. That is to say, during the power saving mode, the reports under the control of the control section 100 should be made to have a minimum cycle so as for the link not be terminated. According to the conventional GSM method, if the periodical report messages are not received more than three times, the link with the wireless telephone set is terminated. By contrast, during the power saving mode of the present invention, the control section 100 can transmit report messages once or twice in a while. While the link is maintained in the above case, the number of reporting decreases, thereby reducing consumption of the electric power. The following is an example of the cycle of the reports.

**Table 1**

| | 1 | 2 | 3 | 4 | 5 | 6 | 7 | 8 | 9 | 10 | 11 | 12 |
|---|---|---|---|---|---|---|---|---|---|---|---|---|
| conventional | 0 | 0 | 0 | 0 | 0 | 0 | 0 | 0 | 0 | 0 | 0 | 0 |
| Example 1 | 0 | × | 0 | × | 0 | × | 0 | × | 0 | × | 0 | × |
| Example 2 | 0 | × | × | 0 | × | × | 0 | × | × | 0 | × | × |
| Example 3 | 0 | × | 0 | × | × | 0 | × | 0 | × | × | 0 | × |
| Example 4 | 0 | 0 | × | 0 | 0 | × | 0 | 0 | × | 0 | 0 | × |
| Example 5 | 0 | 0 | × | × | 0 | 0 | × | × | 0 | 0 | × | × |

In the above Table 1, "o" represents transmission of the report messages, and "x" represents non-transmission of the report messages. As shown in the Table 1, the report messages are transmitted to the extent of avoiding termination of the link between the wireless telephone set and the station. If the number of receipt of the report messages are adjusted to the above level, the transmission frame can be reduced by 7%.

The reports include data obtained by operating a measurement reporting, which means a step of measuring and transmitting various broadcast information received by the wireless telephone set. Here, the measured data include strength of signals received by the neighboring station or information on the station. However, the measurement is not carried out since the power supply to the receiving section 171 has been turned off as stated above. Since the above information should be transmitted to the station, however, the information measured and transmitted to the station before operation of the power saving mode is continuously used, according to the preferred embodiment of the present invention.

In general, the wireless telephone set is used for communication on the phone but a polling is carried out for operating data receipt/transmission with various peripheral devices (an ear microphone, a data link cable, a charger, etc.). However, the polling is not carried out during the power saving mode according to a preferred embodiment of the present invention.

The following Table 2 shows a simple operation in the power saving mode.

**Table 2**

| **Method** | **Contents** | **Reduction effect** |
|---|---|---|
| Transmitted power level | Transmitted level two grades lower than the recommended power level | 10% of transmission power |
| Discontinuous transmission | Cut-off of transmission | 85% of transmission frame |
| Measurement | Not measured | All measurement frame |
| Report | Skip of number of transmission | 7% of transmission frame |
| Power-off | Display section, receiving section, voice processing section | |
| Polling | Interruption of polling | |

As shown above, during the power saving mode according to the preferred embodiment of the present invention, a minimum possible operation is performed to maintain the link with the station while other operations are all interrupted. In other words, the power supply to all the sections except the transmitting section 170 and the control section 100 are turned off.

During the power saving mode, other operations can be performed as a matter of course in addition to the aforementioned operation. On the other hand, all the other operations may also be interrupted or powered off except the operation required to maintain the link with the station.

The control section 100 detects whether or not a key requesting a return to the normal mode is inputted from the key input section 130 by a user in step 250. In other words, the control section 100 detects whether or not the user changes the main battery with another charged main battery and then inputs a key to return to the normal mode. In the affirmative, step 260 is proceeded with. In the negative, step 270 is proceeded with. The control section 100 controls the power supply section 150 and the power selecting section 151, switches the electric power to the main battery, and returns to the normal mode in the step 260. That is to say, the operation interrupted by the power saving mode is re-performed and the electric power is supplied to the various sections which were turned off. Further, if the capacity of the main battery is greater than the predetermined value, the supplementary battery 160 is charged by using the electric power supply of the main battery 161. That is, the supplementary battery 160 should always maintain a fully charged state.

If the electric power is supplied to the receiving section 171, an operation is restored to measure information on the neighboring station as well as on the strength of the received electric power, after suspension of the same during the power saving mode described above. Further, the electric power is also supplied to the voice processing section 120, which performs an output of the received voice data and decryption of the voice data inputted through a microphone. The transmission cycle of the reports is normally operated, and the electric power is also supplied to the key input section 130 and the display section 140. Since an operation of the normal mode is an operation of the wireless telephone set under the normal condition, no further description will be provided herein.

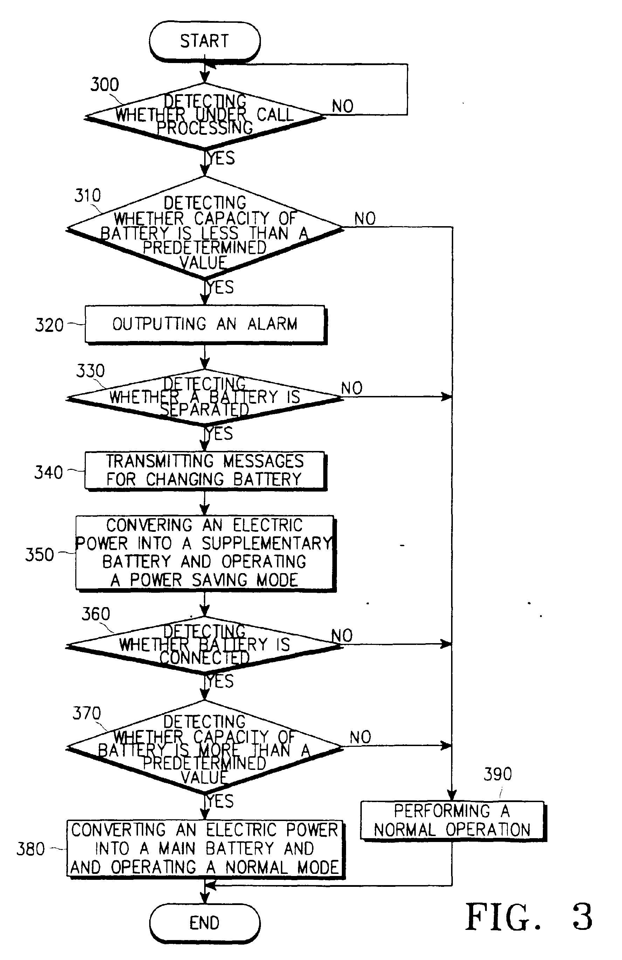

An operation of another preferred embodiment of the present invention will now be described with reference to FIGs. 1 and 3.

FIG. 3 shows a self-operation of a power saving mode according to another preferred embodiment of the present invention. A control section 100 detects whether or not a user is under communication on the phone in step 300. In the affirmative, the control section 100 detects whether or not the capacity of a main battery 161 is less than a predetermined value by means of a power selecting section 151 in step 310. In the affirmative, step 320 is proceeded with. In the negative, step 390 is proceeded with to perform a general operation.

The control section 100 outputs an alarm in step 320. The alarm indicates by a voice processing section 120 through a speaker that the capacity of the battery is insufficient, and that a battery change is required. Here, the data on the voice messages may be the data already stored in a voice memory region of a memory 110. Of course, the alarm messages are outputted in characters by the display section 140. Further, the control section 100 transmits messages to request a communicating partner to wait on call since the user is under battery change.

The control section 100 detects whether or not the main battery 161 has been detached by means of the power selecting section 151 in step 330. In the affirmative, step 340 is proceeded with. The control section 100 outputs messages indicating hte battery is being changed through the display section 140 and the voice processing section 120 in step 340.

The control section 100 switches the electric power of the wireless telephone set from the main battery 161 to the supplementary battery 160 in step 350. The control section 100 also performs the power saving mode. The power saving mode is performed as stated above, and thus no further description will be made herein in detail.

The control section 100 detects whether or not the main battery 161 is reconnected by the power selecting section 151 in step 360. In the affirmative, step 370 is proceeded with, whereas in the negative, step 390 is proceeded with.

The control section detects whether or not the capacity of the main battery 161 is greater than the predetermined value by means of the power selecting section 151 in step 370. In the affimative, step 380 is proceeded with. In the negative, step 390 is proceeded with.

The control section 100 switches the electric power of the wireless telephone set to the main battery 161 by means of the power selecting section 151 and a power supply section 150, and returns to a normal mode in step 390.

In comparison with FIG. 2, FIG. 3 shows that an operation of the power saving mode for a battery change is automatically performed without an input of any keys.

To summarize the present invention, if the capacity of the battery is less than a predetermined value during a call processing, the power saving mode is performed so as to reduce power consumption. Once after the user changes the battery, the electric power is connected by the changed battery, thereby enabling the user a continuous communication.

While the invention has been shown and described with reference to certain preferred embodiments thereof, it will be understood by those skilled in the art that various changes in form and details may be made therein without departing from the spirit and scope of the invention as defined by the appended claims.

As stated above, if the capacity of the battery is less than a predetermined value during a call processing, the power saving mode is performed so as to minimize the power consumption of the wireless telephone set. If the user changes the battery, the electric power is connected to the changed battery, and the normal mode is re-performed. Therefore, the battery can be changed during a call processing without interrupting the talking path. Further, the user can secure sufficient time for the battery change while maintaining the link and minimizing the power consumption.

## Claims

1. A battery changing method during a call processing of a wireless telephone set housing a supplementary battery and a main battery, the method comprising the steps of:
detecting whether or not a capacity of the main battery is less than a predetermined value during the call processing;
in the affirmative, detecting whether or not a mode set key is inputted to request a battery change by a user;
in the affirmative, switching an electric power of the wireless telephone set to the supplementary battery and operating a power saving mode so as to transmit messages for maintaining the wireless link;
detecting whether or not a key requesting a return to a normal mode is inputted during the power saving mode; and
in the affirmative, switching the electric power of the wireless telephone set to the main battery and operating the normal code.

2. The battery changing method of claim 1, wherein the power saving mode operating step comprises a turning off of an electric power supply to a receiving section.

3. The battery changing method of claim 1 or 2, wherein the power saving mode operating step comprises a transmission of messages periodically transmitted by the wireless telephone set to a station to maintain link with the station at minimum intervals necessary for maintaining the link.

4. The battery changing method of one of claims 1 to 3, wherein the power saving mode operating step comprises a transmission of messages to a station to indicate that the wireless telephone set is under a dumb condition.

5. The battery changing method of one of claims 1 to 4, wherein the power saving mode operating step comprises a reduction of a power level of the signals transmitted to a station by the wireless telephone set to a minimum level necessary for maintaining the link with the station and transmitting the same to the station.

6. The battery changing method of one of claims 1 to 5, wherein the power saving mode operating step comprises a step of turning off an electric power supply to a modulator or a demodulator for outputting or inputting voice of the wireless telephone set, respectively.

7. The battery changing method of one of claims 1 to 6, wherein the power saving mode operating step uses a received power level for reporting to a station by the wireless telephone set that has been transmitted before operation of the power saving mode.

8. The battery changing method of one of claims 1 to 7, wherein the power saving mode operating step comprises a step of demodulating received voice data or measuring power level of a periphery station, or not demodulating or receiving recorded broadcast information of the station by the wireless telephone set.

9. The battery changing method of one of claims 1 to 8, wherein the power saving mode operating step comprises a step of turning off an electric power supply to a display section of the wireless telephone set.

10. The battery changing method of one of claims 1 to 9, wherein the power saving mode operating step comprises a turning off of a polling of annexed devices mountable or installable within the wireless telephone set.

11. The battery changing method of one of claims 1 to 10, wherein the normal mode operating step is a re-operation or a re-start of an operation suspended or changed by operation of the power saving mode.

12. The battery changing method of one of claims 1 to 11, wherein the supplementary battery is charged from the main battery or directly charged by means of an external charger if the supplementary battery has not been fully charged in the course of charging or changing the main battery.

13. A battery changing method during a call processing without interrupting a talking path in a wireless telephone set which has a supplementary battery and a main battery, the battery changing method comprising the steps of:
detecting whether or not a capacity of the main battery is less than a predetermined value during the call processing;
in the affirmative, detecting whether or not the main battery has been detached from the wireless telephone set;
in the affirmative, switching an electric power of the telephone set to the supplementary battery and operating a power saving mode; and
operating a normal mode after the main battery is changed during the power saving mode.

14. The battery changing method of claim 13, wherein the power saving mode operating step comprises a turning off of an electric power supply to a receiving section.

15. The battery changing method of claims 13 or 14, wherein the power saving mode operating step comprises a transmission of messages, which are periodically transmitted by the wireless telephone set to a station to maintain link with the station, at minimum intervals necessary for maintaining the link.

16. The battery changing method of one of claims 13 to 15, wherein the power saving mode operating step comprises a transmission of messages to the station to indicate that the wireless telephone set is under a dumb condition.

17. The battery changing method of one of claims 13 to 16, wherein the power saving mode operating step comprises a reduction of power level of signals transmitted to a station by the wireless telephone set to the minimum level necessary for maintaining the link with the station and a transmission of the same to the station.

18. The battery changing method of one of claims 13 to 17, wherein the power saving mode operating step comprises a turning off of a modulator or a demodulator for outputting or inputting of a voice in the wireless telephone set.

19. The battery changing method of one of claims 13 to 18, wherein a received power level for reporting to a station by the wireless telephone set is the received power level transmitted before operating the power saving mode in the power saving operating step.

20. The battery changing method of one of claims 13 to 19, wherein the power saving mode operating step comprises a demodulation of the received voice data or measuring the power level of the periphery station, or not demodulating or receiving the recorded broadcast information of the station by the wireless telephone set.

21. The battery changing method of one of claims 13 to 20, wherein the power saving mode operating step further comprises a turning off of a polling of annexed devices mountable or installable within the wireless telephone set.

22. The battery changing method of one of claims 13 to 21, further comprising the steps of:
outputting alarm messages if the capacity of the battery is less than the predetermined value; and
transmitting messages to a communicating partner to indicate that the battery is being changed if the main battery has been detached from the wireless telephone set.

23. The battery changing method of one of claims 13 to 22, wherein the normal mode operating step is performed if the capacity of the changed main battery is greater than a predetermined value.

24. The battery changing method of one of claims 13 to 23, wherein the supplementary battery is charged from the main battery or directly charged by means of an external charger if the supplementary battery has not been full charged in the course of charging or changing the main battery.

25. A battery changing method during a call processing without interrupting a talking path in a wireless telephone set of a GSM communication manner having a supplementary battery and a main battery, the battery changing method comprising the steps of:
detecting whether or not a capacity of the main battery is less than a predetermined value during the call processing;
in the affirmative, switching an electric power of the wireless telephone set to the supplementary battery and operating a power saving mode; and
operating a normal mode after the main battery is changed during the call processing.

26. The battery changing method of claim 25, wherein the power saving mode operating step comprises a turning off of an electric power supply to a receiving section.

27. The battery changing method of claims 25 or 26, wherein the power saving mode operating step comprises a transmission of messages, which are periodically transmitted to a station in order to maintain link with the station with intervals of skipping once or twice.

28. The battery changing method of one of claims 25 to 27, wherein the power saving mode operating step comprises a transmission of silence messages to indicate that the wireless telephone set is under a dumb condition and an operation of a discontinuous transmission mode so as not to transmit voice data to the station.

29. The battery changing method of one of claims 25 to 28, wherein the power saving mode operating step comprises an adjustment of a power level of signals transmitted by the wireless telephone set to a station to be higher than the power level, which is two grades lower than a recommended power level to maintain link with the station.

30. The battery changing method of one of claims 25 to 29, wherein the power saving mode operating step comprises a turning off of a modulator or a demodulator for outputting or inputting voice of the wireless telephone set.

31. The battery changing method of one of claims 25 to 30, wherein a received power level for reporting to a station by the wireless telephone set is the received power level transmitted before operating the power saving mode in the power saving mode operating step.

32. The battery changing method of one of claims 25 to 31, wherein the power saving mode operating step comprises no demodulation of received voice data or no measurement of a power level of a periphery station, or no demodulation or reception of recorded broadcast information of the station by the wireless telephone set.

33. The battery changing method of one of claims 25 to 32, wherein the power saving mode operating step comprises a turning off of a polling of a charger, a carphone, a microphone or a data link cable device mountable or installable within the wireless telephone set.

34. The battery changing method of one of claims 25 to 33, wherein the supplementary battery is charged from the main battery or directly charged by an external charger if the supplementary battery has not been full charged in the course of charging or changing of the main battery.

35. A wireless telephone set, which is capable of carrying out the battery changing method according to any one of claims 1 to 34.
